# EUROPÄISCHE PATENTSCHRIFT

(11) **EP 0 694 723 B1**
(45) Veröffentlichungstag und Bekanntmachung des Hinweises auf die Patenterteilung: **24.06.1998**
(21) Anmeldenummer: 95250096.5
(22) Anmeldetag: 21.04.1995
(51) Int. Cl.: F16L 11/16, B29C 65/56

(54) **Biegsame Schlauchleitung**
Hose pipe
Conduit à tuyau flexible

(30) Priorität: 22.07.1994 DE 4426722
(43) Veröffentlichungstag der Anmeldung: 31.01.1996
(73) Patentinhaber: MASTERFLEX Kunststofftechnik GmbH, D-45891 Gelsenkirchen (DE)
(72) Erfinder: Herzog, Detlef, D-45892 Gelsenkirchen (DE)
(74) Vertreter: UEXKÜLL & STOLBERG

(56) Entgegenhaltungen:
- DE-A- 2 630 712
- DE-U- 8 708 498
- US-A- 2 763 292
- US-A- 3 273 600
- STOECKHERT 'KUNSTSTOFF LEXIKON', 1980, HANSER VERLAG, MÜNCHEN * Seite 504, rechte Spalte, Zeile 27 - Zeile 38 *
- SAECHTING 'INTERNATIONAL PLASTICS HANDBOOK', 1983, HANSER PUBLISHERS, MÜNCHEN * Seite 294 - Seite 297 *

## Beschreibung

Biegsame Schlauchleitung mit einem aus einer schraubenförmig gewickelten Werkstoffbahn gebildeten Schlauch und einer schraubenförmig gewendelten, metallischen Klemmvorrichtung, die die überlappenden Randbereiche der Werkstoffbahn zusammenhält und sich vollständig an der Außenseite des Schlauches befindet.

Derartige Schlauchleitungen sind bekannt (DE-PS 26 30 712, DE-PS 38 40 599, DE-U-87 08 498) und werden im industriellen Bereich in großem Umfang eingesetzt, insbesondere da als Werkstoffbahn ein bis zu verhältnismäßig hohen Temperaturen beständiges Material verwendet werden kann, die Schlauchleitungen also für die Führung von verhältnismäßig warmen Gasen oder Dämpfen geeignet sind und in einer Umgebung mit erhöhter Temperatur eingesetzt werden können.

Wegen ihrer Temperaturbeständigkeit wären solche Schlauchleitungen auch besonders geeignet, um als Absaugschläuche in Kfz-Werkstätten eingesetzt zu werden. Mit ihnen wäre es möglich, trotz der hohen Abgastemperaturen von modernen Fahrzeugen, etwa Turbo-Dieselfahrzeuge, Fahrzeuge mit höher verdichteten Motoren u.ä., eine Abgasabsaugung vorzunehmen, die mit herkömmlichen Gummi-Schläuchen wegen der hohen Temperaturen nicht möglich ist.

Die bekannten biegsamen Schlauchleitungen wurden bisher jedoch in Kfz-Werkstätten nicht verwendet, da immer die Gefahr bestand, daß die metallischen Klemmvorrichtungen der Schlauchleitungen im Betrieb in Berührung mit Oberflächen der verschiedenen Kraftfahrzeuge gelangten, wodurch es zu einer Beschädigung der Lack-Oberfläche kommen konnte. Die an sich geeigneten Schlauchleitungen haben sich daher für dieses Anwendungsgebiet nicht durchgesetzt.

Es ist Aufgabe der Erfindung, eine biegsame Schlauchleitung so abzuwandeln, daß sie sich u.a. auch für den Einsatz in Kfz-Werkstätten eignet, ohne daß die Gefahr einer Beschädigung von Lack-Oberflächen o.ä. zu befürchten wäre.

Zur Lösung dieser Aufgabe wird eine biegsame Schlauchleitung der eingangs erwähnten Art erfindungsgemäß derart ausgestaltet, daß auf der Klemmvorrichtung ein diese mit den freien Enden von elastisch verformbaren Armen hintergreifendes Profilelement angeordnet ist, das aus einem wärmebeständigen Elastomeren mit einer Härte von mindestens 35 Shore D besteht, wobei das Elastomere vorzugsweise ein thermoplastisches Polyester-Elastomere ist.

Durch die Wärmebeständigkeit des Elastomeren, das bis mindestens 140° C seine Formstabilität und Elastizität beibehält und durch die Anbringung des Profilelementes an der Klemmvorrichtung ohne Verwendung von Klebstoffen o.ä. wird erreicht, daß das Profilelement auch bei höheren Temperaturen, wie sie beispielsweise beim Absaugen von Abgasen von Hochleistungsmotoren von Kraftfahrzeugen entstehen, sicher und zuverlässig auf der Klemmvorrichtung gehalten wird, was bei einer Klebverbindung zwischen Profilelement und metallischer Klemmvorrichtung nicht der Fall wäre, da für eine solche Verbindung geeignete Klebstoffe sich bei den auftretenden Temperaturen zersetzen. Das aus einem Elastomeren bestehende Profilelement deckt die metallische Klemmvorrichtung derart ab, daß nicht die Gefahr besteht, daß bei einer Berührung mit einer Lack-Oberfläche auf dieser Schäden auftreten, oder daß, in einem anderen Anwendungsfall, durch die Berührung von einer metallischen Klemmvorrichtung mit einer anderen Metallfläche eine Funkenbildung entsteht, die in der entsprechenden Umgebung eine Explosion verursachen könnte.

Das Profilelement hat vorzugsweise einen U-förmigen Querschnitt, und zur sicheren hintergreifenden Halterung an der Klemmvorrichtung können an den freien Enden der Arme des Profilelementes nach innen gerichtete Vorsprünge vorhanden sein.

Um die Klemmwirkung zu erhöhen, können die Arme des Profilelementes zu ihren freien Enden konvergieren, also bei einer Aufweitung durch Eingriff mit der metallischen Klemmvorrichtung eine Rückstellkraft ausüben, die die Arme des Profilelementes seitlich gegen die Klemmvorrichtung preßt.

Die Erfindung wird im folgenden anhand der Ausführungsbeispiele zeigenden Figuren näher erläutert.
- Figur 1: zeigt in einer perspektivischen Teildarstellung eine biegsame Schlauchleitung.
- Figur 2: zeigt einen Teilschnitt aus Figur 1 durch die Klemmvorrichtung und benachbarte Abschnitte der Werkstoffbahn, wobei auf die Klemmvorrichtung ein Kunststoffprofil aufgesetzt ist.
- Figur 3: zeigt im Schnitt das Kunststoffprofil aus Figur 2 in unverformten Zustand.
- Figur 4: zeigt in einer Darstellung entsprechend Figur 2 eine andere biegsame Schlauchleitung mit auf die Klemmvorrichtung aufgesetztem Kunststoffprofil.

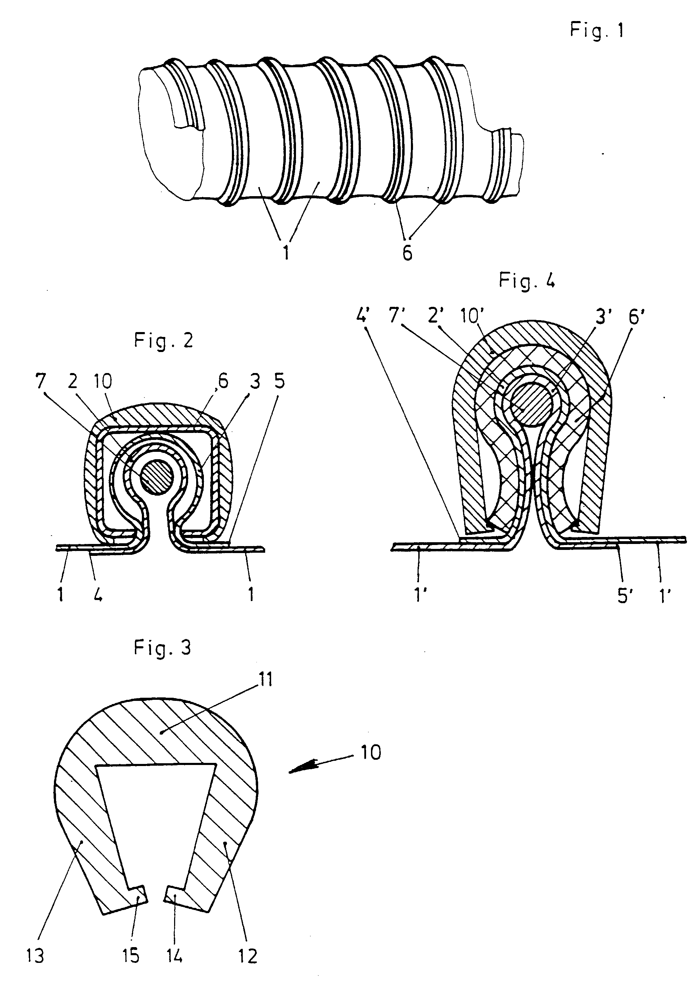

Die in Figur 1 gezeigte biegsame Schlauchleitung entspricht derjenigen aus der DE-PS 26 30 712. Sie hat einen durch eine gewendelte Materialbahn 4 gebildeten Schlauch, und die Randbereiche 2, 3 der gewendelten Materialbahn 4 werden mittels eines ebenfalls gewendelt oder schraubenförmig verlaufenden, eine Klemmvorrichtung bildenden Metallprofils 6 zusammengehalten, in das sich die benachbarten Randbereiche 2, 3 erstrecken, so daß ihre äußeren Seitenkanten 4, 5 außerhalb des Metallprofils 6 liegen und die verengte Öffnung des Metallprofils 6 zusammen mit dem eingelegten Faden oder Draht 7 verhindern, daß die Randbereiche 2, 3 der Metarialbahn 1 unter Belastung aus dem Metallprofil 6 herausrutschen.

Wie in der DE-PS 26 30 712 und auch in der DE-PS 38 40 599 beschrieben, wird auf diese Weise ein biegsamer Schlauch gebildet, bei dem das die Klemmvorrichtung für die Materialbahn 1 bildende Metallprofil 6 außerhalb des eigentlichen Schlauchinnenraums liegt und bei dem die Materialbahn 1 so gewählt werden kann, daß sie die gewünschten Temperaturen o.ä. aushält.

Wie in Figur 2 zu erkennen ist, ist auf die Außenseite des Metallprofils 6 ein aus Kunststoff bestehendes Profil 10 aufgeklemmt, das, wie Figur 3 zu entnehmen ist, im wesentlichen U-Form hat, wobei die beiden Schenkel 12, 13, die sich von der Basis 11 des U erstrecken, im unaufgesetzten Zustand zu ihren freien Enden konvergieren und wobei sich von den freien Enden der Schenkel 12, 13 nach innen Vorsprünge 14, 15 erstrecken. Als geeigneter Kunststoff dient ein wärmebeständiger Kunststoff mit einer Härte von mindestens 35 Shore D, also ein Kunststoff, der eine ausreichende Festigkeit hat und der infolge seiner Wärmebeständigkeit, die eine Beibehaltung seiner Elastizität und Formstabilität bis mindestens 140° C sicherstellen sollte, für den gewünschten Anwendungszweck geeignet ist. Dabei ist der Kunststoff vorzugsweise ein thermoplastisches Polyester-Elastomere ist. Wird dieses elastisch verformbare Profil 10 in der in Figur 2 angedeuteten Weise auf das Metallprofil 6 aufgesetzt, so hintergreifen die Vorsprünge 14, 15 der Schenkel 12, 13 den der Materialbahn 1 benachbarten Bereich des Metallprofils 6 und werden infolge der Elastizität des Profils 10 sicher in dieser Lage gehalten. Sie decken somit das Metall des Metallprofils 6 ab und werden infolge der Elastizität des Profils 10 klemmend gehalten.

In dem Ausführungsbeispiel gemäß Figur 4 sind gleiche bzw. einander entsprechende Teile mit gleichen Bezugszeichen wie in den Figuren 2 und 3, jedoch zusätzlich mit ' bezeichnet.

Der Aufbau der Schlauchleitung gemäß Figur 4 entspricht demjenigen der Schlauchleitung aus der DE-PS 38 40 599. Auch in diesem Fall ist auf das die Klemmvorrichtung bildende Metallprofil 6' ein Kunststoffprofil 10' aufgesetzt und klemmend auf diesem gehalten, wobei das Kunststoffprofil U-förmig ist, jedoch eine gekrümmte Basis hat, deren Materialstärke im wesentlichen gleich der Materialstärke der Schenkel des U ist. Im übrigen hintergreift das Kunststoffprofil 10' das Metallprofil 6' in gleicher Weise mit an den den freien Enden der Schenkel ausgebildeten Vorsprüngen wie in Zusammenhang mit den Figuren 2 und 3 erläutert, und als Material wird ebenfalls ein wärmebeständiges thermoplastisches Polyester-Elastomere bevorzugt.

## Patentansprüche

1. Biegsame Schlauchleitung mit einem aus einer schraubenförmig gewickelten Werkstoffbahn (1; 1') gebildeten Schlauch und einer schraubenförmig gewendelten, metallischen Klemmvorrichtung (6; 6'), die die überlappenden Randbereiche (2, 3; 2', 3') der Werkstoffbahn (1; 1') zusammenhält und sich vollständig an der Außenseite des Schlauches befindet, dadurch gekennzeichnet, daß auf der Klemmvorrichtung (6; 6') ein diese mit den freien Enden (14, 15) von elastisch verformbaren Armen (12, 13) hintergreifendes Profilelement (10; 10') angeordnet ist, das aus einem wärmebeständigen Elastomeren mit einer Härte von mindestens 35 Shore D besteht.

2. Schlauchleitung nach Anspruch 1, dadurch gekennzeichnet, daß das Profilelement (10; 10') aus einem thermoplastischen Polyester-Elastomeren besteht.

3. Schlauchleitung nach Anspruch 1 oder 2, dadurch gekennzeichnet, daß das Profilelement (10; 10') im wesentlichen U-förmig ist.

4. Schlauchleitung nach einem der Ansprüche 1 bis 3, dadurch gekennzeichnet, daß an den freien Enden der Arme (12, 13) des Profilelemetes (10) nach innen gerichtete Vorsprünge (14, 15) vorhanden sind.

5. Schlauchleitung nach einem der Ansprüche 1 bis 4, dadurch gekennzeichnet, daß die Arme (12, 13) des Profilelementes (10; 10') zu ihren freien Enden konvergieren.

## Claims

1. Flexible hose pipe with a hose formed from a helically wound web of material (1; 1') and a helically coiled metallic clamping device (6; 6') which holds together the overlapping margins (2, 3; 2', 3') of the web of material (1; 1') and is located completely on the exterior of the hose, characterized in that, on the clamping device (6; 6') there is arranged a profile element (10; 10') which engages behind the clamping device (6; 6') with the free ends (14, 15) of elastically deformable arms (12, 13) and consists of a heat-resistant elastomer having a Shore D hardness of at least 35.

2. Hose pipe according to ciaim 1, characterized in that the profile element (10; 10') consists of a thermoplastic polyester elastomer.

3. Hose pipe according to claim 1 or 2, characterized in that the profile element (10; 10') is substantially U-shaped.

4. Hose pipe according to one of claims 1 to 3, characterized in that inwardly directed projections (14, 15) are provided at the free ends of the arms (12, 13), of the profile element (10).

5. Hose pipe according to one of claims 1 to 4, characterized in that the arms (12, 13) of the profile element (10; 10') converge toward their free ends.

## Revendications

1. Conduit en forme de tuyau flexible comportant un tuyau formé par une bande de matériau (1;1') enroulée selon une disposition hélicoïdale, et un dispositif métallique de serrage (6;6'), qui est enroulé selon une disposition hélicoïdale et qui maintient assemblées les parties marginales en chevauchement (2,3; 2',3') de la bande de matériau (1;14) et est entièrement situé sur la face extérieure du tuyau, caractérisé en ce que sur le dispositif de serrage (6;6') est disposé un élément profilé (10;10'), qui s'engage derrière ce dispositif de serrage au moyen des extrémités libres (14,15) de bras déformables élastiquement (12,13) et qui est constitué par un élastomère résistant à la chaleur et possédant une dureté égale au moins à 35 Shore D.

2. Conduit en forme de tuyau selon la revendication 1, caractérisé en ce que l'élément profilé (10;10') est constitué par un élastomère de polyester thermoplastique.

3. Conduit en forme de tuyau selon la revendication 1 ou 2, caractérisé en ce que l'élément profilé (10;10') est essentiellement en forme de U.

4. Conduit en forme de tuyau selon l'une des revendications 1 à 3, caractérisé en ce que des parties saillantes (14,15) dirigées vers l'intérieur sont présentes sur les extrémités libres des bras (12,13) de l'élément profilé (10).

5. Conduit en forme de tuyau selon l'une des revendications 1 à 4, caractérisé en ce que les bras (12,13) de l'élément profilé (10;10') convergent vers leurs extrémités libres.
